# EUROPEAN PATENT SPECIFICATION

(11) **EP 2 235 879 B1**
(45) Date of publication and mention of the grant of the patent: **10.10.2018**
(21) Application number: 09702052.3
(22) Date of filing: 06.01.2009
(51) Int. Cl.: H04L 12/24, H04L 29/06

(54) **COMMUNICATION PARAMETER SETTING**
FESTLEGEN VON KOMMUNIKATIONSPARAMETERN
RÉGLAGE DE PARAMÈTRES DE COMMUNICATIONS

(30) Priority: 15.01.2008 JP 2008005810
(43) Date of publication of application: 06.10.2010
(73) Proprietor: Canon Kabushiki Kaisha, Tokyo 146-8501 (JP)
(72) Inventor: SAKAI, Tatsuhiko, Tokyo 146-8501 (JP)
(74) Representative: TBK
(86) International application number: PCT/JP2009/050261
(87) International publication number: WO 2009/090925

(56) References cited:
- EP-A1- 1 775 914
- WO-A1-02/51188
- WO-A1-2006/098552
- WO-A1-2007/110090
- US-A1- 2006 185 001
- US-A1- 2006 282 541

## Description

### TECHNICAL FIELD

The present invention relates to a communication apparatus and a control method therefor.

### BACKGROUND ART

In wireless communication represented by a wireless LAN complying with the IEEE802.11 standard series, there are many setting items to be set in advance.

The setting items include communication parameters necessary for wireless communication, such as an SSID (Service Set IDentifier) as a network identifier, an encryption method, an encryption key, an authentication method, and an authentication key. It is very troublesome for a user to set them by manual input.

Various manufacturers have proposed automatic setting schemes for easily setting communication parameters in a wireless apparatus. In those automatic setting schemes, one apparatus provides another apparatus with communication parameters using a procedure predetermined between these connected apparatuses and a message, thereby automatically setting the communication parameters.

The WPS (Wi-Fi CERTIFIED(TM) for Wi-Fi Protected Setup: Easing the User Experience for Home and Small Office Wi-Fi(R) Networks, http://www.wi-fi.org/wp/wifi-protected-setup) standard has disclosed a communication parameter automatic setting scheme.

Communication parameter automatic setting schemes include a scheme (to be referred to as an authentication code scheme hereinafter) in which the user inputs an authentication code to an apparatus, and a scheme (to be referred to as a non-authentication code scheme hereinafter) in which the user does not input an authentication code.

In the authentication code scheme, apparatuses share an authentication code, and execute authentication processing between them. When the authentication processing between two apparatuses succeeds, these apparatuses perform setting processing. In this case, the authentication processing allows the apparatuses to securely transfer communication parameters.

In the non-authentication code scheme, upon detecting a terminal which has started communication parameter automatic setting, communication parameters are automatically provided to the terminal. As an example of the non-authentication code scheme, there is a scheme of starting setting processing by pressing the setting start button of an apparatus, and executing, during the setting processing, automatic setting with another apparatus which has started setting processing in the same manner. Since an unintended apparatus may be provided with communication parameters in the non-authentication code scheme, the security level of this scheme is lower than that of the authentication code scheme. However, the user need not input an authentication code, thus simplifying the operation.

As described above, in the authentication code scheme, it is possible to transfer communication parameters more securely than in the non-authentication code scheme. It is therefore desirable to be able to provide different communication parameters in accordance with a communication parameter automatic setting scheme to be used.

Conventional techniques in the above-described field of technology are, for example, known from the following documents.

The document EP 1 775 914 A1 relates to a communication apparatus and a communication parameter setting method. To set communication parameters, a communication apparatus identifies a communication parameter setting wireless network on the basis of a network identifier provided in itself. If the communication apparatus can identify any network identifier matching the network identifier provided in itself, it sets the communication parameters in cooperation with another communication apparatus in the wireless network. If no identifier can be identified, the communication apparatus switches the setting of the communication parameters to a manual operation.

The document US 2006/0282541 A1 A discloses a method for setting communication parameters in a plurality of communication devices, which includes setting communication parameters without an authentication process being performed for a second communication device in a case where a first communication device has received a request for setting communication parameters from the second communication device within a predetermined period of time from the start of setting communication parameters, and setting communication parameters after the authentication process has been performed for the second communication device in a case where the first communication device has received a request for setting communication parameters from the second communication device after the expiration of the predetermined period of time from the start of setting communication parameters.

The document US 2006/0185001 A1 relates to configuration of a network device via an authentication protocol. In summary, this document describes an authentication server, which identifies a security level on which a remote device can access the network, and provides the remote device with communication parameters corresponding to the identified security level.

The document WO 2006/098552 A1 relates to negotiation of security-related functions of a subscriber station in a wireless portable internet system. In summary, this document describes a subscriber station, which informs a base station of "subscriber station-supportable security-related functions", receives "base station-negotiated security-related functions", and determines security-related functions to be performed.

The document WO 02/51188 A1 relates to over-the-air service provisioning in a mobile communications system. In summary, this document describes ENUM serving means which transmits ENUM (DNS) information according to identification information of the terminal.

The document WO 2007/110090 A1 relates to generic access performance abstraction for access selection. In summary, this document describes a Multi Access Management entity (MAM) which provides a Generic Link Layer Entity (GLL) with configuration information according to Generic Performance Metrics (GPM) determined by the GLL.

Conventional communication parameter automatic setting schemes, however, have no mechanism for automatically providing different communication parameters in accordance with a setting scheme.

Therefore, when communication parameters are to be selectively provided in conventional communication parameter automatic setting, the user needs to manually select communication parameters to be provided every time, thereby impairing convenience.

### SUMMARY OF INVENTION

It is an object of the present invention to provide a communication apparatus and a control method therefor, which are capable of overcoming or at least mitigating above-described drawbacks and/or deficiencies of conventional techniques.

According to one aspect of the present invention, there is provided a communication apparatus as defined in any one of claims 1 to **4.**

According to another aspect of the present invention, there is provided a control method as defined in claim **5.** Also, there are provided a respective computer program as defined in claim **6** and a respective computer-readable storage medium as defined in claim **7.**

According to the present invention, it is possible to automatically and selectively provide communication parameters in accordance with a communication parameter automatic setting scheme, thereby improving convenience.

Further features of the present invention will become apparent from the following description of exemplary embodiments (with reference to the attached drawings).

### BRIEF DESCRIPTION OF DRAWINGS

The accompanying drawings, which are incorporated in and constitute a part of the specification, illustrate embodiments of the invention and, together with the description, serve to explain the principles of the invention.
Fig. 1 is a block diagram showing a block configuration within a terminal;
Fig. 2 is a block diagram showing functional blocks within a parameter providing terminal according to an embodiment of the present invention;
Fig. 3 is a block diagram showing functional blocks within a parameter receiving terminal according to the embodiment of the present invention;
Fig. 4 is a view collectively showing a configuration in the embodiment;
Fig. 5 is a flowchart showing the operation of a communication parameter provider according to the embodiment;
Fig. 6 is a flowchart showing the operation of the authentication code scheme of a communication parameter acceptor according to the embodiment;
Fig. 7 is a flowchart showing the operation of the non-authentication code scheme of a communication parameter acceptor according to the
   embodiment;
Fig. 8 is a sequence chart showing the operation of terminal A and terminal B according to the embodiment; and
Fig. 9 is a sequence chart showing the operation of terminal A and terminal C according to the embodiment.

### BEST MODE FOR CARRYING OUT THE INVENTION

A communication apparatus according to the present invention will be described in detail below with reference to the accompanying drawings. Although a case in which a wireless LAN system complying with the IEEE802.11 standard series is used will be explained blow, a communication method to be used is not necessarily limited to a wireless LAN.

A hardware configuration in the preferred embodiment will be described.

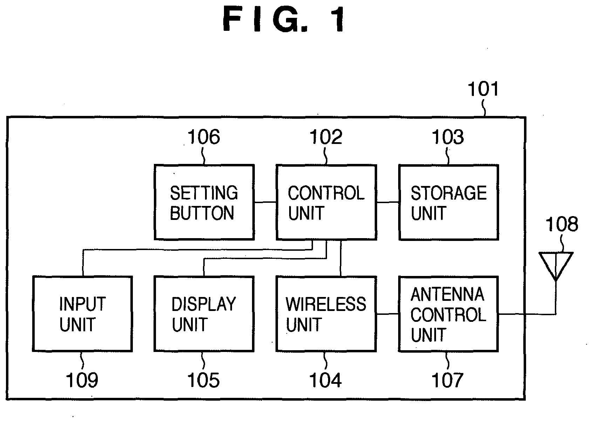

Fig. 1 is a block diagram showing a configuration of each terminal (to be described later) according to this embodiment. Reference numeral 101 denotes a terminal as a whole; and 102, a control unit which controls the terminal as a whole by executing control programs stored in a storage unit 103. The control unit 102 also controls communication parameter setting with another terminal. The storage unit 103 stores the control programs executed by the control unit 102 and various pieces of information such as communication parameters. Various operations (to be described later) are performed when the control unit 102 executes the control programs stored in the storage unit 103. Reference numeral 104 denotes a wireless unit for wireless communication; 105, a display unit which provides various displays and has a function capable of outputting visually perceivable information like an LCD (Liquid Crystal Display) or LED (Light Emitting Diode), or a function capable of outputting a sound like a loudspeaker; and 106, a setting button which triggers a start of communication parameter setting. The control unit 102 starts a communication parameter setting operation (to be described later) by detecting a user operation of the setting button 106. Reference numeral 107 denotes an antenna control unit; 108, an antenna; and 109, an input unit which inputs an authentication code to be used in the communication parameter setting operation (to be described later). The storage unit 103 stores the input authentication code.

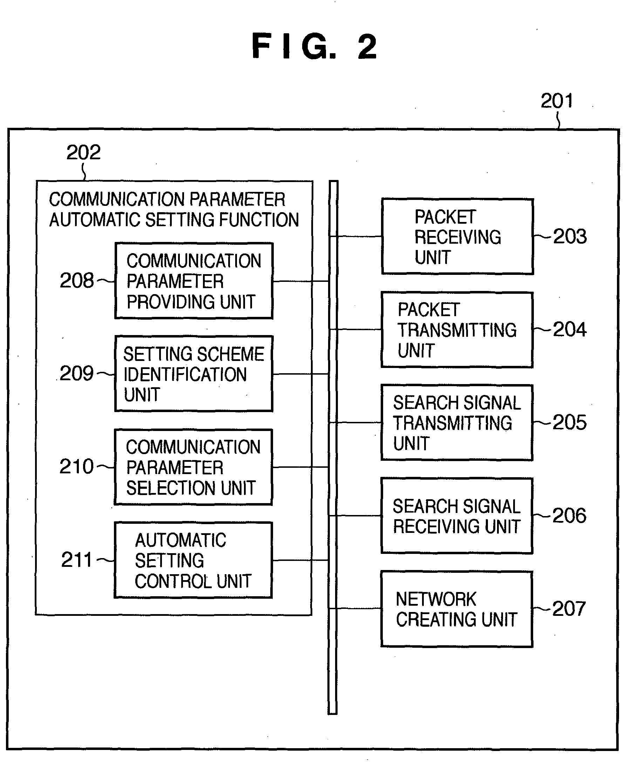

Fig. 2 is a block diagram showing a configuration of software functional blocks executed by a terminal according to this embodiment, which provides communication parameters in the communication parameter setting operation (to be described later).

Reference numeral 201 denotes a terminal as a whole; and 202, a communication parameter automatic setting functional block. In this embodiment, communication parameters necessary for wireless communication, such as an SSID as a network identifier, an encryption method, an encryption key, an authentication method, and an authentication key are automatically set. In this embodiment, there are two communication parameter automatic setting schemes, that is, an authentication code scheme and a non-authentication code scheme. Reference numeral 203 denotes a packet receiving unit which receives packets associated with various communications; 204, a packet transmitting unit which transmits packets associated with various communications; and 205, a search signal transmitting unit which controls transmission of apparatus search signals such as a Probe_Request signal. Note that the Probe_Request signal can also be referred to as a network search signal for searching for a desired network. The search signal transmitting unit 205 executes transmission processing of a Probe_Request signal (to be described later). The search signal transmitting unit 205 also performs transmission processing of a Probe_Response signal as a response signal to a received Probe_Request signal.

Reference numeral 206 denotes a search signal receiving unit which controls reception of apparatus search signals such as a Probe_Request signal from another terminal. The search signal receiving unit 206 executes reception processing of a Probe_Request signal (to be described later). The search signal receiving unit 206 also performs reception processing of a Probe_Response signal. Note that various pieces of information (self-information) on an apparatus that transmits an apparatus search signal are added to the apparatus search signal.

Reference numeral 207 denotes a network creating unit which creates a network. The network creating unit 207 creates a wireless LAN ad-hoc network in the wireless parameter setting operation (to be described later).

In the communication parameter automatic setting functional block, reference numeral 208 denotes a communication parameter providing unit which provides a partner apparatus with communication parameters; 209, a setting scheme identification unit which identifies a communication parameter automatic setting scheme to be used by the partner apparatus by referring to a message received from the partner apparatus during the communication parameter automatic setting process; and 210, a communication parameter selection unit which selects communication parameters to be provided to the partner apparatus on the basis of the communication parameter automatic setting scheme identified by the setting scheme identification unit 209. The user sets, in advance by operating the input unit 109, the communication parameters which are selected by the communication parameter selection unit 210 in accordance with the setting scheme. Reference numeral 211 denotes an automatic setting control unit which controls various protocols in communication parameter automatic setting. The communication parameter providing unit 208, the setting scheme identification unit 209, and the communication parameter selection unit 210 execute a communication parameter automatic setting process (to be described later) under the control of the automatic setting control unit 211.

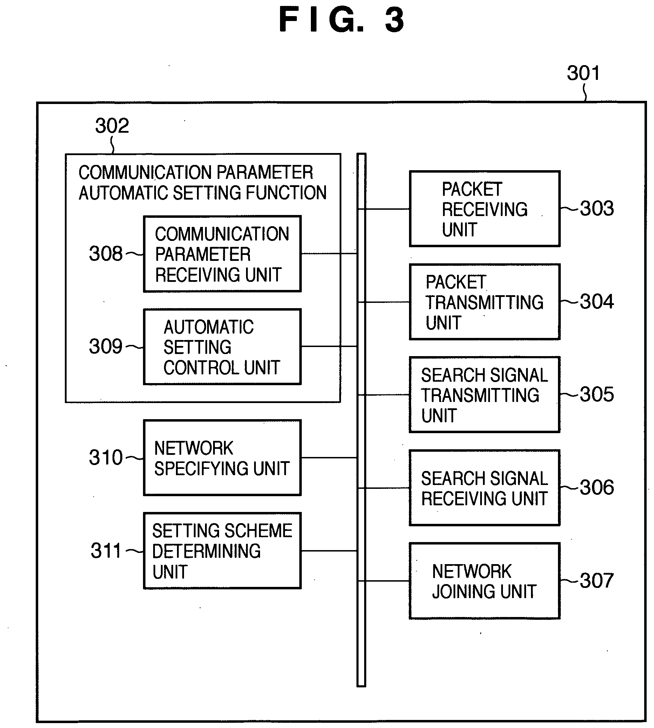

Fig. 3 is a block diagram showing a configuration of software function blocks executed by a terminal according to this embodiment, which receives communication parameters in the communication parameter setting operation (to be described later).

Reference numeral 301 denotes a terminal as a whole; and 302, a communication parameter automatic setting functional block. In this embodiment, communication parameters necessary for wireless communication, such as an SSID as a network identifier, an encryption method, an encryption key, an authentication method, and an authentication key are automatically set. In this embodiment, there are two communication parameter automatic setting schemes, that is, the authentication code scheme and the non-authentication code scheme. Reference numeral 303 denotes a packet receiving unit which receives packets associated with various communications; 304, a packet transmitting unit which transmits packets associated with various communications; and 305, a search signal transmitting unit which controls transmission of apparatus search signals such as a Probe_Request signal. Note that the Probe_Request signal can also be referred to as a network search signal for searching for a desired network. The search signal transmitting unit 305 executes transmission processing of a Probe_Request signal (to be described later). The search signal transmitting unit 305 also performs transmission processing of a Probe_Response signal as a response signal to a received Probe_Request signal.

Reference numeral 306 denotes a search signal receiving unit which controls reception of apparatus search signals such as a Probe_Request signal from another terminal. The search signal receiving unit 306 executes reception processing of a Probe_Request signal (to be described later). The search signal receiving unit 306 also performs reception processing of a Probe_Response signal.

Reference numeral 307 denotes a network joining unit for joining a network. The network joining unit 307 executes a network joining process (to be described later).

In the communication parameter automatic setting functional block 302, reference numeral 308 denotes a communication parameter receiving unit which receives communication parameters transmitted from a communication parameter provider.

Reference numeral 309 denotes an automatic setting control unit which controls various protocols in communication parameter automatic setting. The communication parameter receiving unit 308 executes a communication parameter automatic setting process (to be described later) under the control of the automatic setting control unit 309.

Reference numeral 310 is a network specifying unit which specifies, in the communication parameter automatic setting process, a network which a communication parameter provider joins. The network specifying unit 310 executes a network specifying process (to be described later).

Reference numeral 311 is a setting scheme determining unit which determines a setting scheme to be used in the communication parameter automatic setting process. The setting scheme determining unit 311 determines whether the storage unit 103 stores an authentication code input from the input unit 109. If the storage unit 103 stores the authentication code, the setting scheme determining unit 311 determines to use the authentication code scheme; otherwise, the unit 311 determines to use the non-authentication code scheme.

Note that all the software functional blocks are correlated with each other in a software or hardware manner. The above functional blocks are merely examples. A plurality of functional blocks may constitute one functional block, or any one of the functional blocks may be divided into a plurality of blocks each executing a function.

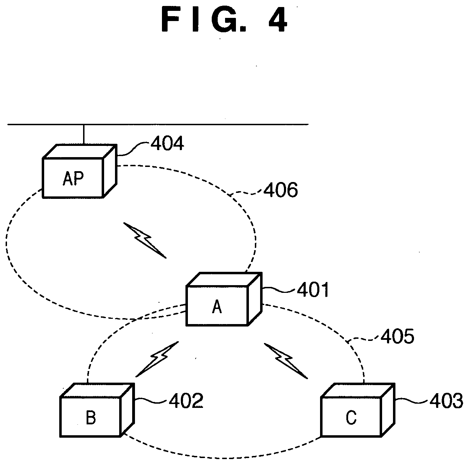

Fig. 4 is a view showing a terminal A 401 (to be referred to as terminal A hereinafter), a terminal B 402 (to be referred to as terminal B hereinafter), a terminal C 403 (to be referred to as terminal C hereinafter), and an access point 404. Fig. 4 also shows a wireless LAN ad-hoc network 405 created by terminal A. Furthermore, Fig. 4 shows a wireless LAN infrastructure network 406 created by the access point 404.

Terminal A, terminal B, and terminal C have a IEEE802.11 wireless LAN communication function, and wirelessly communicate with each other by wireless LAN ad hoc communication. Terminal A has the configuration shown in Figs. 1 and 2 described above. Each of terminal B and terminal C has the configuration shown in Figs. 1 and 3.

Each terminal can wirelessly communicate with the access point by switching a communication mode to an infrastructure communication mode.

The storage unit 103 of terminal A stores, in advance, the first communication parameters for data communication on the network 405. The storage unit 103 of terminal A also stores, in advance, the second communication parameters necessary for joining the network 406.

Furthermore, the storage unit 103 of terminal A stores, in advance, an authentication code necessary for terminal A to execute the authentication code scheme.

Terminal A is a communication parameter provider, and provides terminal B and terminal C with communication parameters. In this case, terminal B and terminal C are communication parameter acceptors.

Consider a case in which terminal C performs communication parameter automatic setting by the non-authentication code scheme with terminal A, and executes data communication on the network 405 created by terminal A. Consider also a case in which terminal B performs communication parameter automatic setting by the authentication code scheme with terminal A, and joins the network 406 created by the access point.

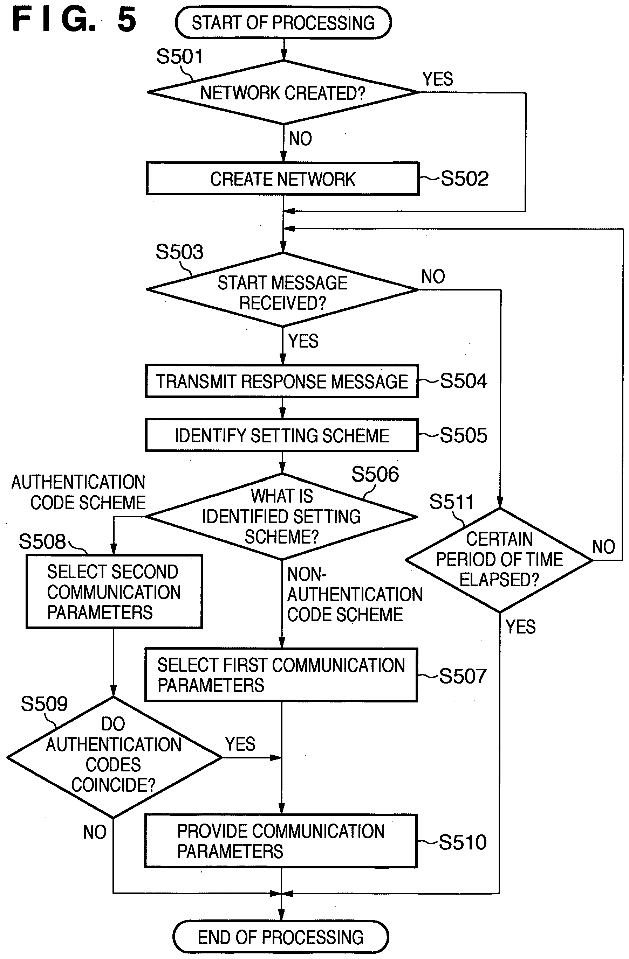

Fig. 5 is an operation flowchart for explaining processing when terminal A provides communication parameters by executing a communication parameter automatic setting process. In the following explanation, assume that an apparatus which receives communication parameters is an acceptor (receiving apparatus). When the user operates the setting button of terminal A, the processing shown in Fig. 5 starts.

The network creating unit 207 of terminal A determines whether the network 405 for ad-hoc communication has been created. If the network 405 is not created, the unit 207 creates the network (S501 and S502) .

After the network is created, when the search signal receiving unit 206 of terminal A receives a Probe_Request signal, the search signal transmitting unit 205 returns a Probe_Response signal which contains additional information representing communication parameter automatic setting.

After that, the automatic setting control unit 211 of terminal A waits for a start message of communication parameter automatic setting to be transmitted from an acceptor for a certain period of time (S503). If the unit 211 receives no start message until the certain period of time elapses, the processing ends (S511).

If terminal A receives a start message of communication parameter automatic setting, the automatic setting control unit 211 returns a response message to the acceptor, and starts a process of providing the acceptor with communication parameters (S504). The automatic setting control unit 211 causes the setting scheme identification unit 209 to identify a communication parameter automatic setting scheme to be used by the acceptor (S505). The start message contains information for identifying a communication parameter automatic setting scheme to be used by the acceptor. The setting scheme identification unit 209 checks the information to identify a setting scheme to be used by the acceptor.

After the setting scheme is identified, the automatic setting control unit 211 causes the communication parameter selection unit 210 to select, based on the setting scheme identified in step S505, parameters to be provided to the acceptor. If the unit 209 identifies that the acceptor uses the non-authentication code scheme, the communication parameter selection unit 210 selects the first communication parameters as communication parameters to be provided to the acceptor (S506 and S507). If the unit 209 identifies that the acceptor uses the authentication code scheme, the communication parameter selection unit 210 selects the second communication parameters as communication parameters to be provided to the acceptor (S506 and S508).

If the non-authentication code scheme is used, the automatic setting control unit 211 causes the communication parameter providing unit 208 to provide the acceptor with the first communication parameters by the non-authentication code scheme (S510), and ends the processing.

If the authentication code scheme is used, the automatic setting control unit 211 exchanges messages with the acceptor, and determines whether an authentication code input to the acceptor coincides with that stored in the self-terminal (S509). If they coincide with each other as a result of the determination, the automatic setting control unit 211 provides the acceptor with the second communication parameters by the authentication code scheme (S510), and ends the processing. If they do not coincide, the automatic setting control unit 211 ends the processing without providing communication parameters.

In the above explanation, if the acceptor uses the non-authentication code scheme, the first communication parameters are selected. If the acceptor uses the authentication code scheme, the second communication parameters are selected. The reason why the first communication parameters are selected in the case of the non-authentication code scheme is to prohibit a wired network connected with the access point 404 from being accessed. This is because the security level of the non-authentication code scheme is lower than that of the authentication code scheme (the non-authentication code scheme is less secure). On the other hand, in the case of the authentication code scheme, since the security level is higher (the authentication code scheme is more secure), the wired network connected with the access point 404 is allowed to be accessed. However, as for the communication parameters to be provided, the above explanation may be reversed. That is, if the non-authentication code scheme is used, the second communication parameters may be selected. If the authentication code scheme is used, the first communication parameters may be selected. In this case, since only a terminal which has input a predetermined authentication code can execute communication on the network 405, it is possible to use the network 405 as a network which can be used by only the user who knows the authentication code.

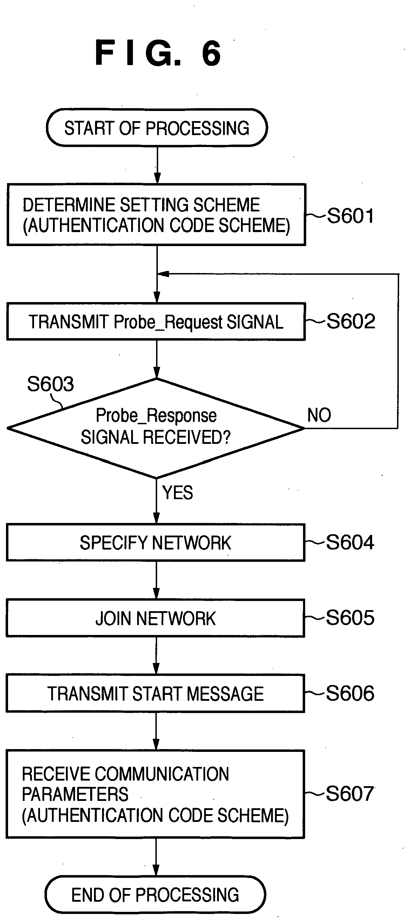

Fig. 6 is an operation flowchart for explaining processing when terminal B receives communication parameters by executing a communication parameter automatic setting process. When the user inputs an authentication code in terminal B, and then operates the setting button, the processing shown in Fig. 6 starts.

After the processing starts, the setting scheme determining unit 311 of terminal B checks the storage unit 103, and determines to use the authentication code scheme (S601).

After the determination, the search signal transmitting unit 305 of terminal B transmits a Probe_Request signal (S602).

Then, the search signal receiving unit 306 of terminal B waits for a Probe_Response signal, which contains additional information representing communication parameter automatic setting, to be transmitted from the provider (S603). If no Probe_Response signal which contains additional information representing communication parameter automatic setting is transmitted until a certain period of time elapses, terminal B repeats transmission of a Probe_Request signal.

If the unit 306 receives a Probe_Response signal, the network specifying unit 310 of terminal B specifies, based on information contained in the Probe_Response signal, the network identifier of the network created by the provider (S604).

Upon specifying the network identifier, the network joining unit 307 of terminal B joins the network created by the provider (S605). In this case, terminal B sets the network identifier specified in step S604, and joins the network created by the provider. It is therefore possible to communicate for communication parameter automatic setting. Since an encryption method and an encryption key are not set, however, it is impossible to communicate data on the network.

After joining the network, the automatic setting control unit 309 of terminal B causes the communication parameter receiving unit 308 to transmit a start message of communication parameter automatic setting, and starts a process of receiving communication parameters from the provider (S606). The automatic setting control unit 309 of terminal B adds, to a message to be transmitted to the provider, information representing that the authentication code scheme is used as a setting scheme.

The communication parameter receiving unit 308 receives communication parameters from the provider by the authentication code scheme using the authentication code which has been input in advance (S607). Note that after receiving the communication parameters, the automatic setting control unit 309 deletes the authentication code, which has been input from the input unit 109, stored in the storage unit 103.

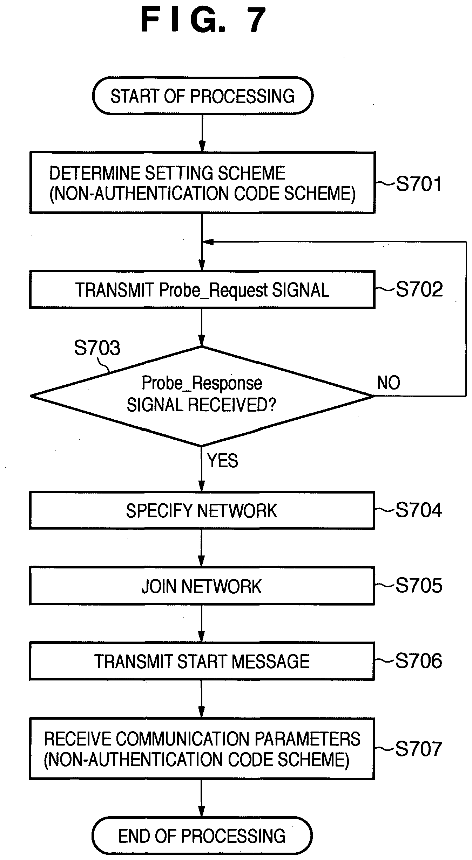

Fig. 7 is an operation flowchart for explaining processing when terminal C receives communication parameters by executing a communication parameter automatic setting process. Note that when the user operates the setting button of terminal C, the processing shown in Fig. 7 starts.

After the processing starts, the setting scheme determining unit 311 of terminal C checks the storage unit 103, and determines to use the non-authentication code scheme (S701).

After the determination, the search signal transmitting unit 305 of terminal C transmits a Probe_Request signal (S702).

Then, the search signal receiving unit 306 of terminal C waits for a Probe_Response signal, which contains additional information representing communication parameter automatic setting, to be transmitted from the provider (S703). If no Probe_Response signal which contains additional information representing communication parameter automatic setting is transmitted until a certain period of time elapses, terminal C repeats transmission of a Probe_Request signal.

If the unit 306 receives a Probe_Response signal, the network specifying unit 310 of terminal C specifies, based on information contained in the Probe_Response signal, the network identifier of the network created by the provider (S704).

Upon specifying the network identifier, the network joining unit 307 of terminal C joins the network created by the provider (S705). In this case, terminal C sets the network identifier specified in step S704, and joins the network created by the provider. It is therefore possible to communicate for communication parameter automatic setting. Since an encryption method and an encryption key are not set, however, it is impossible to communicate data on the network.

After joining the network, the automatic setting control unit 309 of terminal C causes the communication parameter receiving unit 308 to transmit a start message of communication parameter automatic setting, and starts a process of receiving communication parameters from the provider (S706). The automatic setting control unit 309 of terminal C adds, to a message to be transmitted to the provider, information representing that the non-authentication code scheme is used as a setting scheme.

The communication parameter receiving unit 308 receives communication parameters from the provider by the non-authentication code scheme (S707).

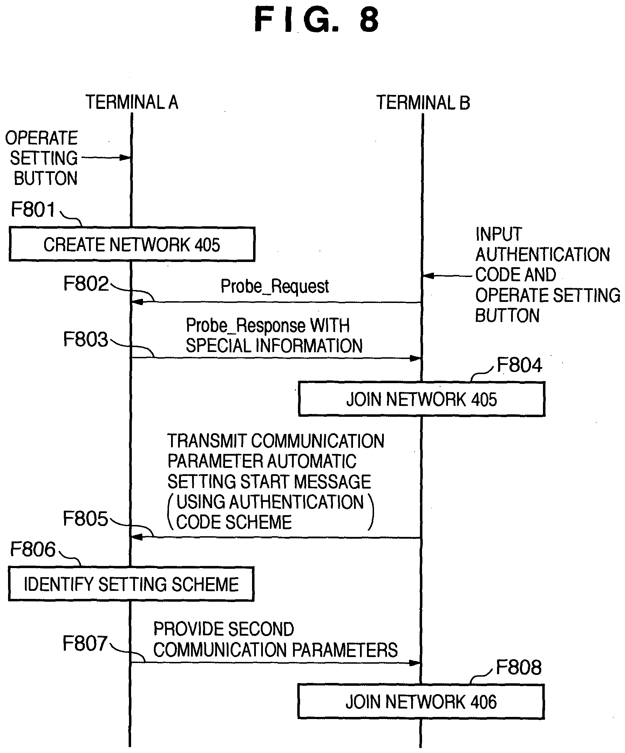

Fig. 8 is a sequence chart showing processing when terminal B receives the communication parameters of the network 406 from terminal A, and joins the network 406. In Fig. 8, assume that the processing starts in a state in which terminal A does not create the network 405.

When the user operates the setting button of terminal A, terminal A starts the processing of Fig. 5. Upon start of the processing, terminal A creates the network 405 (F801).

When the user inputs, to terminal B, the same authentication code as that stored in terminal A, and then operates the setting button, terminal B starts the processing of Fig. 6. After that, terminal B determines to use the authentication code scheme, transmits a Probe_Request signal (F802), and searches for a provider.

Terminal A which has received the Probe_Request signal transmitted in F802 returns, to terminal B, a Probe_Response signal to which an identifier representing that terminal A has a communication parameter automatic setting function is added (F803).

Terminal B which has received the Probe_Response signal to which the identifier representing that terminal A has the communication parameter automatic setting function is added detects and specifies the network 405 created by terminal A, and then joins the network (F804). After joining the network, terminal B transmits a message notifying that terminal B uses the authentication code scheme for communication parameter automatic setting (F805).

On the network 405, terminal A identifies that terminal B uses the authentication code scheme for communication parameter automatic setting (F806), and selects the second communication parameters which are provided in a case of the authentication code scheme. Terminal A then provides terminal B with the second communication parameters by the authentication code scheme (F807).

Upon reception of the communication parameters, terminal B joins the network 406 using the received second communication parameters, and ends the processing (F808).

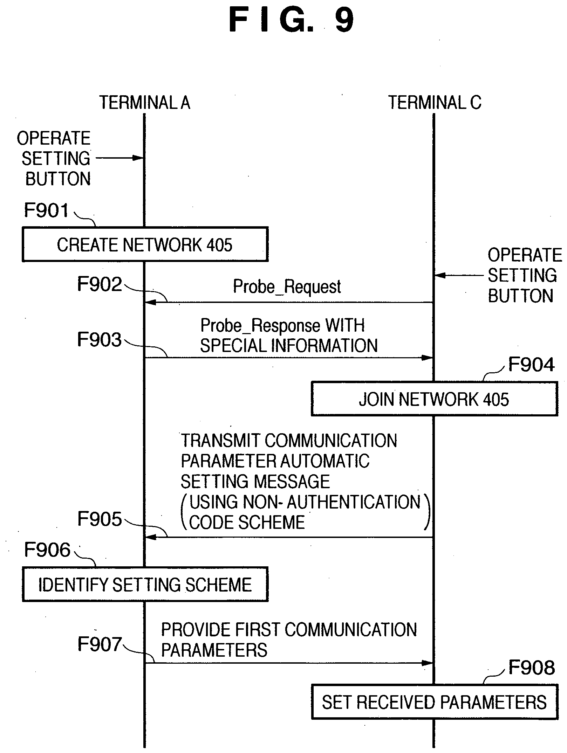

Fig. 9 is a sequence chart showing processing when terminal C receives the communication parameters of the network 405 from terminal A, and joins the network 405. In Fig. 9, assume that the processing starts in a state in which terminal A does not create the network 405.

When the user operates the setting button of terminal A, terminal A starts the processing of Fig. 5. Upon start of the processing, terminal A creates the network 405 (F901).

When the user operates the setting button of terminal C, terminal C starts the processing of Fig. 7. Terminal C then determines to use the non-authentication code scheme, transmits a Probe_Request signal (F902), and searches for a provider.

Terminal A which has received the Probe_Request signal transmitted in F902 returns, to terminal C, a Probe_Response signal to which an identifier representing that terminal A has a communication parameter automatic setting function is added (F903).

Terminal C which has received the Probe_Response signal to which the identifier representing that terminal A has the communication parameter automatic setting function is added detects and specifies the network 405 created by terminal A, and then joins the network (F904).

After joining the network, terminal C transmits a message notifying that terminal C uses the non-authentication code scheme for communication parameter automatic setting (F905).

On the network 405, terminal A identifies that terminal C uses the non-authentication code scheme for communication parameter automatic setting (F906), and selects the first communication parameters which are provided in a case of the non-authentication code scheme. Terminal A then provides terminal C with the first communication parameters by the non-authentication code scheme (F907).

Upon reception of the communication parameters, terminal C sets the received first communication parameters in itself, and enters a state in which it is possible to communicate data with terminal A (F908).

Note that although a case in which the first communication parameters are used for the ad-hoc network and the second communication parameters are used for the infrastructure network has been explained, both of the first and second parameters may be used for the infrastructure or ad-hoc network. Although the authentication code scheme and non-authentication code scheme have been described as examples of the setting scheme to be identified, the present invention is not limited to them and any setting scheme which can be identified from a received message is usable. For example, one of various setting schemes provided by various manufacturers may be identified, and communication parameters may be selected and provided in accordance with the identified setting scheme.

As described above, when providing an acceptor with communication parameters, a provider automatically selects, based on a communication parameter automatic setting scheme to be used by the acceptor, communication parameters to be provided. This allows the provider to easily and quickly select the communication parameters suitable for the acceptor. It is therefore possible to efficiently and easily execute communication parameter automatic setting for providing and receiving the communication parameters.

Although the preferred embodiments of the present invention have been described above, they are merely examples for explaining the present invention, and are not intended to limit the scope of the present invention. Various modifications can be made to the embodiments without departing from the scope of the present invention, which is defined by the appended claims.

For example, in the above explanation of the embodiments, Probe_Request and Probe_Response signals are used. However, signals to be transmitted are not limited to them, and other signals playing the same roles may be used.

An IEEE802.11 wireless LAN has been explained as an example. The present invention may, however, be implemented in another wireless medium such as wireless USB, MBOA, Bluetooth®, UWB (Ultra Wide Band), or ZigBee. The present invention may also be implemented in a wired communication medium such as a wired LAN.

Note that MBOA is an abbreviation for Multi Band OFDM Alliance. UWB includes wireless USB, wireless 1394, and WINET.

Although a network identifier, encryption method, encryption key, authentication method, and authentication key are used as examples of communication parameters, another information may be used and also included in communication parameters.

In the present invention, a storage medium which stores software program codes for implementing the above-described functions may be supplied to a system or apparatus, and the computer (or the CPU or MPU) of the system or apparatus may read out and execute the program codes stored in the storage medium. In this case, the program codes read out from the storage medium implement the functions of the above-described embodiments, and the storage medium which stores the program codes constitutes the present invention.

The storage medium for supplying the program codes includes a flexible disk, hard disk, optical disk, magnetooptical disk, CD-ROM, CD-R, magnetic tape, nonvolatile memory card, ROM, and DVD.

The above-described functions are implemented when the computer executes the readout program codes. Also, the above-described functions may be implemented when an OS running on the computer performs some or all of actual processes on the basis of the instructions of the program codes. OS is an abbreviation for an Operating System.

Furthermore, the above-described functions may be implemented when the program codes read out from the storage medium are written in the memory of a function expansion board inserted into the computer or the memory of a function expansion unit connected to the computer, and the CPU of the function expansion board or function expansion unit performs some or all of actual processes on the basis of the instructions of the program codes.

While the present invention has been described with reference to exemplary embodiments, it is to be understood that the invention is not limited to the disclosed exemplary embodiments. The scope of the present invention is defined by the following claims to be accorded the broadest interpretation so as to encompass all such modifications and equivalent structures and functions.

## Claims

1. A communication apparatus (201, 401) comprising:
storage means (103) for storing first communication parameters to wirelessly communicate in a first wireless network and second communication parameters to wirelessly communicate in a second wireless network;
identification means (209) for identifying that a communication parameter setting scheme used by an acceptor apparatus (301, 402, 403) of the communication parameters is either an authentication code scheme or a non-authentication code scheme, wherein for said authentication code scheme an authentication code is to be input by a user and for said non-authentication code scheme no authentication code is to be input by a user;
selection means (210) for selecting, from the communication parameters stored in said storage means, any one of the first communication parameters and the second communication parameters in accordance with the setting scheme identified by said identification means; and
providing means (208) for providing the acceptor apparatus with the communication parameters selected by said selection means in accordance with the setting scheme identified by said identification means,
wherein said identification means is adapted to identify the setting scheme on the basis of information contained in a start message of communication parameter setting received from the acceptor apparatus, said information representing that the authentication code scheme or the non-authentication code scheme is used as the setting scheme by the acceptor apparatus.

2. The apparatus according to claims 1, wherein one of the first communication parameters and the second communication parameters are the communication parameters for communication via a network (406) created by an access point (404), and the other communication parameters are for communication via a network (405) created by said apparatus (401).

3. The apparatus according to claim 1 or 2, wherein said selection means is adapted to select the first communication parameters when the authentication code scheme is identified by the identification means, and to select the second communication parameters when the non-authentication code scheme is identified by the identification means.

4. The apparatus according to claim 1 or 2, wherein said selection means is adapted to select the first communication parameters when the non-authentication code scheme is identified by the identification means, and to select the second communication parameters when the authentication code scheme is identified by the identification means.

5. A control method for a communication apparatus (201, 401), comprising:
identifying (S505, S506) that a communication parameter setting scheme used by an acceptor apparatus (301, 402, 403) of communication parameters is either an authentication code scheme or a non-authentication code scheme, wherein for said authentication code scheme an authentication code is to be input by a user and for said non-authentication code scheme no authentication code is to be input by a user;
selecting (S506, S507, S508) any one of first communication parameters to wirelessly communicate in a first wireless network and second communication parameters to wirelessly communicate in a second wireless network in accordance with the identified setting scheme; and
providing (S510) the acceptor apparatus with the selected communication parameters in accordance with the identified setting scheme,
wherein the setting scheme is identified on the basis of information contained in a start message of communication parameter setting received from the acceptor apparatus, said information representing that the authentication code scheme or the non-authentication code scheme is used as the setting scheme by the acceptor apparatus.

6. A computer program comprising instructions which, when executed on a communication apparatus, cause the communication apparatus to execute the control method according to claim 5.

7. A computer-readable storage medium storing the computer program according to claim 6.

## Patentansprüche

1. Kommunikationsvorrichtung (201, 401) mit:
einer Speichereinrichtung (103) zum Speichern von ersten Kommunikationsparametern zum drahtlosen Kommunizieren in einem ersten Drahtlosnetzwerk und zweiten Kommunikationsparametern zum drahtlosen Kommunizieren in einem zweiten Drahtlosnetzwerk;
einer Identifikationseinrichtung (209) zum Identifizieren, dass ein Kommunikationsparametereinstellschema, das durch eine Abnehmervorrichtung (301, 402, 403) der Kommunikationsparameter verwendet wird, entweder ein Authentisierungscodeschema oder ein Nichtauthentisierungscodeschema ist, wobei für das Authentisierungscodeschema ein Authentisierungscode durch einen Benutzer einzugeben ist und für das Nichtauthentisierungscodeschema kein Authentisierungscode durch einen Benutzer einzugeben ist;
einer Auswahleinrichtung (210) zum Auswählen von einen von den ersten Kommunikationsparametern und den zweiten Kommunikationsparametern, aus den in der Speichereinrichtung gespeicherten Kommunikationsparametern, gemäß dem durch die Identifikationseinrichtung identifizierten Einstellschema; und
einer Belieferungseinrichtung (208) zum Beliefern der Abnehmervorrichtung mit den durch die Auswahleinrichtung ausgewählten Kommunikationsparametern gemäß dem durch die Identifikationseinrichtung identifizierten Einstellschema,
wobei die Identifikationseinrichtung angepasst ist zum Identifizieren des Einstellschemas auf Grundlage von Informationen, die in einer von der Abnehmervorrichtung empfangenen Startnachricht einer Kommunikationsparametereinstellung enthalten sind, wobei die Informationen darstellen, dass das Authentisierungscodeschema oder das Nichtauthentisierungscodeschema als das Einstellschema durch die Abnehmervorrichtung verwendet wird.

2. Vorrichtung gemäß Anspruch 1, wobei die einen von den ersten Kommunikationsparametern und den zweiten Kommunikationsparametern die Kommunikationsparameter zur Kommunikation über ein Netzwerk (406) sind, das durch einen Zugangspunkt (404) gebildet wird, und die anderen Kommunikationsparameter zur Kommunikation über ein Netzwerk (405) dienen, das durch die Vorrichtung (401) gebildet wird.

3. Vorrichtung gemäß Anspruch 1 oder 2, wobei die Auswahleinrichtung angepasst ist zum Auswählen der ersten Kommunikationsparameter, wenn das Authentisierungscodeschema durch die Identifikationseinrichtung identifiziert wird, und zum Auswählen der zweiten Kommunikationsparameter, wenn das Nichtauthentisierungscodeschema durch die Identifikationseinrichtung identifiziert wird.

4. Vorrichtung gemäß Anspruch 1 oder 2, wobei die Auswahleinrichtung angepasst ist zum Auswählen der ersten Kommunikationsparameter, wenn das Nichtauthentisierungscodeschema durch die Identifikationseinrichtung identifiziert wird, und zum Auswählen der zweiten Kommunikationsparameter, wenn das Authentisierungscodeschema durch die Identifikationseinrichtung identifiziert wird.

5. Steuerverfahren für eine Kommunikationsvorrichtung (201, 401), mit:
Identifizieren (S505, S506), dass ein Kommunikationsparametereinstellschema, das durch eine Abnehmervorrichtung (301, 402, 403) von Kommunikationsparametern verwendet wird, entweder ein Authentisierungscodeschema oder ein Nichtauthentisierungscodeschema ist, wobei für das Authentisierungscodeschema ein Authentisierungscode durch einen Benutzer einzugeben ist und für das Nichtauthentisierungscodeschema kein Authentisierungscode durch einen Benutzer einzugeben ist;
Auswählen (S506, S507, S508) von einen von ersten Kommunikationsparametern zum drahtlosen Kommunizieren in einem ersten Drahtlosnetzwerk und zweiten Kommunikationsparametern an zum drahtlosen Kommunizieren in einem zweiten Drahtlosnetzwerk gemäß dem identifizierten Einstellschema; und
Beliefern (S510) der Abnehmervorrichtung mit den ausgewählten Kommunikationsparametern gemäß dem identifizierten Einstellschema,
wobei das Einstellschema auf Grundlage von Informationen identifiziert wird, die in einer von der Abnehmervorrichtung empfangenen Startnachricht einer Kommunikationsparametereinstellung enthalten sind, wobei die Informationen darstellen, dass das Authentisierungscodeschema oder das Nichtauthentisierungscodeschema als das Einstellschema durch die Abnehmervorrichtung verwendet wird.

6. Computerprogramm mit Anweisungen, die, wenn sie auf einer Kommunikationsvorrichtung ausgeführt werden, die Kommunikationsvorrichtung veranlassen zum Ausführen des Steuerverfahrens gemäß Anspruch 5.

7. Computerlesbares Speichermedium, das das Computerprogramm gemäß Anspruch 6 speichert.

## Revendications

1. Appareil de communication (201, 401), comprenant :
un moyen de mémorisation (103) destiné à mémoriser des premiers paramètres de communication pour communiquer par voie sans fil dans un premier réseau sans fil et des seconds paramètres de communication pour communiquer par voie sans fil dans un second réseau sans fil ;
un moyen d'identification (209) destiné à identifier qu'un schéma de définition de paramètres de communication utilisé par un appareil accepteur (301, 402, 403) des paramètres de communication est soit un schéma de code d'authentification soit un schéma de code autre que d'authentification, dans lequel en ce qui concerne ledit schéma de code d'authentification, un code d'authentification doit être entré par un utilisateur et, en ce qui concerne ledit schéma de code autre que d'authentification, aucun code d'authentification ne doit être entré par un utilisateur ;
un moyen de sélection (210) destiné à sélectionner, à partir des paramètres de communication mémorisés dans ledit moyen de mémorisation, soit les premiers paramètres de communication soit les seconds paramètres de communication conformément au schéma de définition identifié par ledit moyen d'identification ; et
un moyen de fourniture (208) destiné à fournir, à l'appareil accepteur, les paramètres de communication sélectionnés par ledit moyen de sélection conformément au schéma de définition identifié par ledit moyen d'identification,
dans lequel ledit moyen d'identification est apte à identifier le schéma de définition sur la base d'informations contenues dans un message de début de définition de paramètres de communication reçu de l'appareil accepteur, lesdites informations représentant le fait que le schéma de code d'authentification ou le schéma de code autre que d'authentification est utilisé en tant que schéma de définition par l'appareil accepteur.

2. Appareil selon la revendication 1, dans lequel soit les premiers paramètres de communication soit les seconds paramètres de communication sont les paramètres de communication concernant à une communication par le biais d'un réseau (406) créé par un point d'accès (404), et les autres paramètres de communication concernent une communication par le biais d'un réseau (405) créé par ledit appareil (401).

3. Appareil selon la revendication 1 ou la revendication 2, dans lequel ledit moyen de sélection est apte à sélectionner les premiers paramètres de communication lorsque le schéma de code d'authentification est identifié par le moyen d'identification, et à sélectionner les seconds paramètres de communication lorsque le schéma de code autre que d'authentification est identifié par le moyen d'identification.

4. Appareil selon la revendication 1 ou la revendication 2, dans lequel ledit moyen de sélection est apte à sélectionner les premiers paramètres de communication lorsque le schéma de code autre que d'authentification est identifié par le moyen d'identification, et à sélectionner les seconds paramètres de communication lorsque le schéma de code d'authentification est identifié par le moyen d'identification.

5. Procédé de commande d'un appareil de communication (201, 401), consistant à :
identifier (S505, S506) qu'un schéma de définition de paramètres de communication utilisé par un appareil accepteur (301, 402, 403) de paramètres de communication est soit un schéma de code d'authentification soit un schéma de code autre que d'authentification, dans lequel en ce qui concerne ledit schéma de code d'authentification, un code d'authentification doit être entré par un utilisateur et, en ce qui concerne ledit schéma de code autre que d'authentification, aucun code d'authentification ne doit être entré par un utilisateur ;
sélectionner (S506, S507, S508) soit les premiers paramètres de communication pour communiquer par voie sans fil dans un premier réseau sans fil soit les seconds paramètres de communication pour communiquer par voie sans fil dans un second réseau sans fil conformément au schéma de définition identifié ; et
fournir (S510), à l'appareil accepteur, les paramètres de communication sélectionnés conformément au schéma de définition identifié,
dans lequel le schéma de définition est identifié sur la base d'informations contenues dans un message de début de définition de paramètres de communication reçu de l'appareil accepteur, lesdites informations représentant le fait que le schéma de code d'authentification ou le schéma de code autre que d'authentification est utilisé en tant que schéma de définition par l'appareil accepteur.

6. Programme informatique comprenant des instructions qui, lorsqu'elles sont exécutées sur un appareil de communication, amènent l'appareil de communication à exécuter le procédé de commande selon la revendication 5.

7. Support d'informations lisible par ordinateur contenant en mémoire le programme informatique selon la revendication 6.
